Europäisches Patentamt

European Patent Office

Office européen des brevets

(11) Numéro de publication: **0 370 950**
**A1**

## (12) DEMANDE DE BREVET EUROPEEN

(21) Numéro de dépôt: 89810857.6

(22) Date de dépôt: 09.11.89

(51) Int. Cl.⁵: **B23H 1/00, B23H 7/26, B23Q 1/08**

(30) Priorité: 21.11.88 CH 4302/88

(43) Date de publication de la demande:
**30.05.90 Bulletin 90/22**

(84) Etats contractants désignés:
**AT BE CH DE ES FR GB IT LI NL SE**

(71) Demandeur: **Krähenbühl, André**
**Courtils 2**
**CH-2035 Corcelles(CH)**

(72) Inventeur: **Krähenbühl, André**
**Courtils 2**
**CH-2035 Corcelles(CH)**

(74) Mandataire: **North, Mathieu**
**Rue du Puits-Godet 22**
**CH-2001 Neuchâtel(CH)**

(54) **Machine à électro-érosion à fil.**

(57) Cette machine d'étincelage en milieu liquide présente une électrode à fil. Une broche (1) actionnée par un moteur électrique (15) est placée dans un carter étanche (17). Un mandrin (3) à serrage hydraulique permet de fixer la pièce usinée à la broche et de la faire tourner contre l'électrode. Le courant passe du carter à la broche par des bagues conductrices (11, 12), puis au mandrin. Les roulements porteurs de l'axe de la broche sont isolés par des bagues isolantes (8). Les bagues isolantes évitent le passage du courant dans les billes et leur usure par électro-érosion. La machine permet de tourner des pièces par électro-érosion en milieu liquide et d'obtenir ainsi des surfaces non réglées, par exemple des surfaces sphériques, en combinant le mouvement rotatif de la pièce à usiner avec un mouvement de translation de l'électrode à fil par rapport à la pièce à usiner.

FIG. 1

## MACHINE A ELECTRO-EROSION A FIL

La découpe par étincelage, notamment à fil, a pris un développement énorme ces dernières années, surtout pour des pièces de haute précision. L'un des progrès les plus significatifs a été l'introduction dans ces machines d'un dispositif permettant d'incliner le fil avec un angle important, ce qui permet de découper des surfaces réglées de toutes formes (voir par exemple le brevet suisse Agie no. 639 308).

Il n'est toutefois pas possible, malgré la grande diversité des formes qui peuvent être obtenues par ce procédé, de tailler par ce moyen des surfaces dont la génératrice n'est pas une droite. Par exemple, il est impossible avec les machines existantes de tailler une surface sphérique. Les surfaces de ce genre sont toujours obtenues par le procédé éprouvé de la rectification, qui exige toutefois des délais assez longs et des dépenses considérables.

D'autre part, il n'est pas possible, selon les procédés couramment employés, de faire des fentes très fines de grande profondeur. Le meulage, habituellement utilisé, ne permet pas des fentes très profondes.

On a certes décrit des machines dans lesquelles la pièce usinée est fixée de telle manière qu'il soit possible de la faire tourner sur elle-même par rapport à l'électrode. C'est par exemple le cas des brevets ouest-allemand DE-A-3204502 Rauch et américain US-A-3609280.

Si l'obtention de surfaces non réglées, et par exemple sphériques, et de fentes profondes et fines, est sans doute possible au moyen des procédés décrits dans ces documents, par la combinaison des mouvements de translation du fil et du mouvement de rotation de la pièce usinée, ces dispositifs ne sont pas utilisés dans la pratique, et notamment pas dans des machines dans lesquelles les pièces sont usinées en milieu liquide.

Le moyen le plus simple d'obtenir un mouvement rotatif de la pièce usinée consiste à fixer celle-ci sur une broche classique de tour. Bien entendu, les broches sont montées sur des roulements, à billes ou à rouleaux, qui assurent une rotation précise.

D'autre part, la pièce usinée doit être reliée à un pôle électrique inverse de celui de l'électrode. Etant donné que la pièce est en mouvement, le meilleur moyen consiste à faire passer le courant par la broche et le mandrin qui tient la pièce.

Or, la broche étant mobile rotativement, le courant doit nécessairement passer d'une partie fixe à la broche. Une solution simple consiste à faire passer le courant par le canon dans lequel se trouve la broche, et qui est en général métallique.

Un tel dispositif fonctionne. Il présente cependant un inconvénient majeur : en passant du canon à la broche, le courant passe notamment par les roulements. Or, la surface des billes ou rouleaux, ainsi que la surface du chemin de roulement dans lesquels roulent les billes ou rouleaux, présente des aspérités microscopiques. Lors de la rotation, les aspérités des billes ou rouleaux s'approchent et s'éloignent successivement des aspérités du chemin de roulement; il se forme ainsi des arcs passagers, mais fréquents et nombreux, qui provoquent une érosion des roulements. Une telle érosion provoque à relativement court terme une destruction du roulement ou du palier. Or, la précision est essentielle dans ce genre d'usinage.

D'autre part, il est indispensable non seulement que la broche puisse tourner sans perdre sa précision, mais également qu'elle puisse tourner en milieu liquide, et notamment dans l'eau, qui est le liquide le plus couramment employé en électro-érosion. Il importe donc de la protéger.

S'il existe des appareils à électro-érosion dans lesquels l'électrode tourne, comme c'est le cas par exemple dans ceux que décrivent les brevets français no. 2 130 386 et 2 572 317, il s'agit là de dispositifs qui ne s'appliquent nullement aux machines à électrode à fil. De telles machines sont incapables de fournir des résultats comparables en précision à ceux que donnent les machines à électrode à fil. De plus, dans de tels dispositifs, il n'est pas possible d'obtenir, par exemple, des surfaces sphériques.

Les présentes inventions visent à fournir une machine d'étincelage permettant d'obtenir des surfaces non réglées en utilisant une broche dont les roulements ou paliers conservent leur précision; elles visent en outre à fournir un appareil permettant à la broche de fonctionner en milieu liquide.

Les inventions sont définies dans les revendications 1 et 13.

Les dessins représentent, à titre d'exemples, et partiellement, deux formes d'exécution des inventions.

La figure 1 est une coupe longitudinale vue de dessus d'une première forme d'exécution d'un appareil selon l'invention.

La figure 2 est une coupe identique d'une deuxième forme d'exécution d'un machine selon l'invention.

La machine d'électro-érosion à fil n'est pas montrée dans son ensemble ici, car il s'agit d'une machine classique. Seul est montré l'appareil qui porte la broche et qui est destiné à être monté dans la machine pour faire tourner la pièce qui doit être usinée par étincelage au moyen du fil.

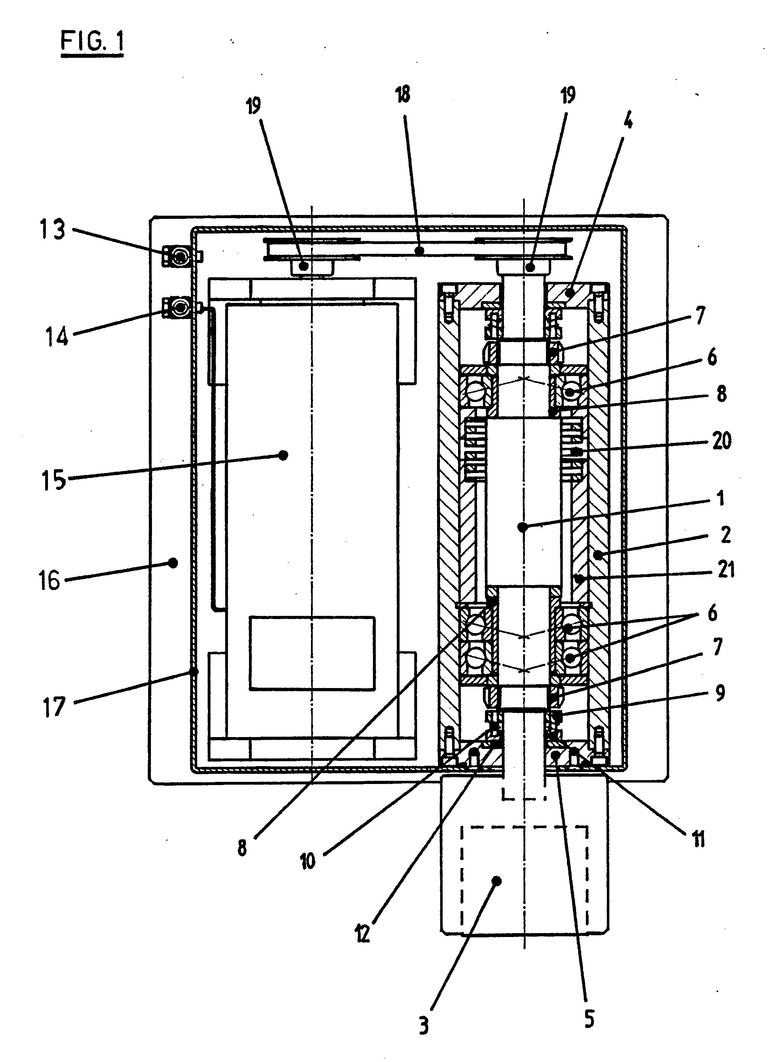

Dans la forme d'exécution de la figure 1, l'appareil présente une base 16 sur laquelle est fixé un carter 17 étanche. Dans le carter sont fixés un moteur électrique 15 et un canon de broche 2 contenant la broche 1 et le mécanisme nécessaire à sa rotation, et notamment les roulements 6. Deux poulies 19, fixées respectivement à un bout de la broche et à un bout du moteur, sont reliées par une courroie 18. Un mandrin 3 est fixé à l'autre bout de la broche 1. Le courant est amené à la broche par le carter, avec lequel la broche est en contact. Les roulements sont montés sur des bagues isolantes 8. Il faut que le matériau dont sont constituées ces bagues isolantes soit non seulement isolant, mais également assez dur pour garantir une précision suffisante. Par exemple, on peut utiliser de la céramique ou du plastique. Un raccord pneumatique 13 assure l'arrivée d'un gaz comprimé, qui sera par exemple de l'air. Cette surpression permet d'éviter des infiltrations de liquides pendant le tournage, si celui-ci se fait en milieu liquide, par exemple dans de l'eau, ce qui est très fréquemment le cas. C'est d'ailleurs essentiellement dans des machines dans lesquelles la pièce est usinée en milieu liquide que l'invention trouve son application.

Dans une forme d'exécution qui n'est pas représentée ici, le gaz comprimé est enfermé dans une bonbonne incluse dans le carter. La pression désirée est obtenue à l'aide d'un manodétendeur. Dans une telle forme d'exécution, il est utile d'insérer un dispositif qui ferme automatiquement la bonbonne lorsque la broche ne tourne pas. En effet, les moyens d'étanchéité placés à la sortie de l'arbre sont suffisants pour éviter des infiltrations de liquides lorsque la broche est immobile.

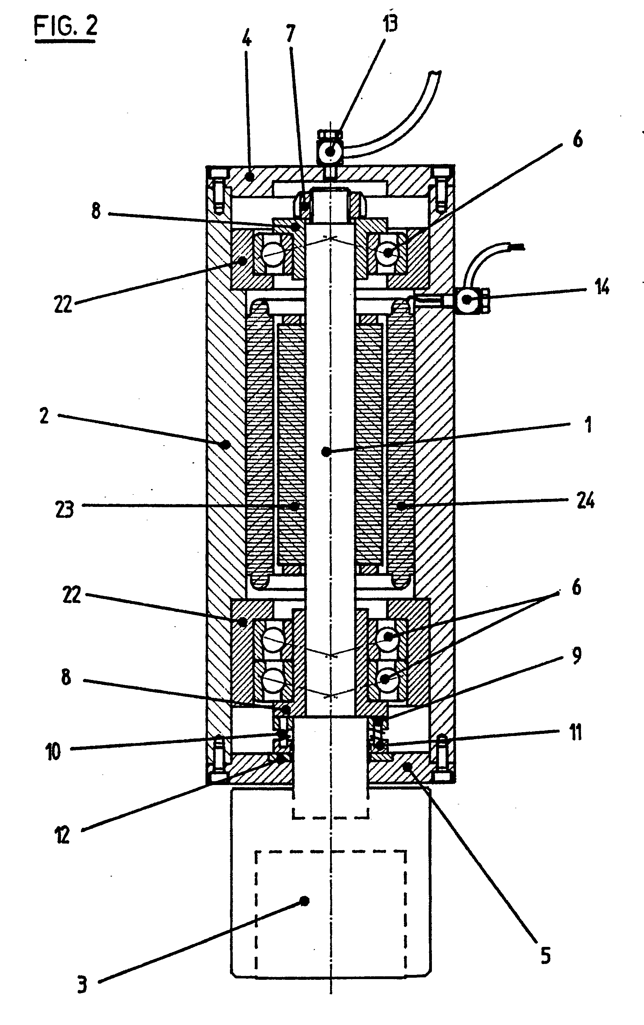

La figure 2 montre une deuxième forme d'exécution plus compacte dans laquelle le moteur est monté directement sur l'arbre de la broche : le stator 24 est solidaire du canon 2 de la broche, et le rotor 23 est fixé sur l'arbre 1 . L'arbre de la broche est monté sur des bagues isolantes 8 qui sont entre le roulement 6 et l'arbre. Le carter, dans cette forme d'exécution, est formé par le canon de la broche lui-même et par deux couvercles 4 et 5 qui ferment le canon à chaque bout. L'arbre de la broche passe à travers l'un de ces deux couvercles, du côté du mandrin.

On peut noter que, dans les deux formes d'exécution représentées dans les dessins, les moyens d'étanchéité à l'endroit où l'arbre sort du carter comprennent une bague de frottement fixe 12 fixée dans le couvercle, et une bague de frottement tournante 11, solidaire de l'axe de la broche.

Le courant, amené par le raccord électrique 14, doit passer du couvercle 4 ou 5 jusqu'au mandrin, et de là à la pièce usinée. Le courant doit passer par l'arbre de la broche. Afin d'assurer un passage aussi aisé que possible, la bague de frottement fixe 12 est faite de préférence en graphite, et la bague de frottement tournante 11, qui est en métal conducteur, est pressée contre la bague de frottement fixe au moyen de tiges à ressort 10 qui s'appuient sur une bague d'entraînement 9. Dans la forme d'exécution de la figure 1, des ressorts de précontrainte 20, associés à des entretoises 21 et à un écrou 7, assurent l'absence de jeu de l'ensemble.

Les bagues isolantes interdisent le passage du courant à travers les billes des roulements et suppriment de ce fait l'érosion de ces pièces par étincelage. Muni de cette seule protection, le dispositif peut déjà fonctionner en milieu non liquide. Toutefois, c'est évidemment avec un système d'étanchéité qu'il présente tout son intérêt.

**Revendications**

1. Machine pour l'usinage de pièces par électro-érosion à fil, caractérisée en ce qu'elle comprend au moins une broche montée sur roulements ou paliers, apte à être mue par un moteur et à faire tourner la pièce usinée par rapport à l'électrode, et comprenant en outre des moyens assurant l'isolation électrique des roulements ou paliers par rapport à l'électrode.

2. Machine selon la revendication 1, caractérisée en ce que la broche est placée dans un carter étanche et vide de liquide, le carter étant placé dans un liquide de façon que la pièce à usiner soit immergée et que l'opération d'étincelage ait lieu sous la surface du liquide.

3. Machine selon la revendication 2, caractérisée en ce que le carter est rempli de gaz sous pression.

4. Machine selon la revendication 3, caractérisée en ce que le carter présente au moins un tuyau d'amenée de gaz sous pression.

5. Machine selon la revendication 3, caractérisée en ce qu'elle comprend des moyens aptes à faire démarrer ou arrêter le moteur actionnant la broche en fonction d'une baisse de la pression du gaz.

6. Machine selon les revendications 3 et 4, caractérisée en ce qu'elle comprend des moyens aptes à amener du gaz sous pression ou à faire arrêter l'arrivée de gaz sous pression en fonction de la marche ou de l'arrêt du moteur.

7. Machine selon les revendications 4 et 5.

8. Machine selon les revendications 5 et 6.

9. Machine selon la revendication 1, caractérisée en ce que les moyens assurant l'isolation électrique des roulements par rapport à l'électrode sont des bagues isolantes placées entre la broche et les roulements.

10. Machine selon la revendication 9 et l'une des revendications 2 à 9.

11. Machine selon les revendications 2, 3 et 9, caractérisée en ce qu'elle comprend un moteur électrique apte à actionner la broche, et en ce que le rotor est fixé directement sur la broche et le stator directement sur la paroi intérieure du canon de la broche.

12. Machine selon la revendication 11, caractérisée en ce que le carter étanche est formé du canon de la broche et de deux couvercles, l'extrémité de la broche porteuse du mandrin passant à travers l'un de ces deux couvercles.

13. Appareil pour une machine selon l'une des revendications 1 à 12, caractérisé en ce qu'il comprend au moins une broche montée sur roulements ou paliers, apte à être mue par un moteur et à faire tourner la pièce usinée par rapport à l'électrode à fil, et comprenant en outre des moyens assurant l'isolation électrique des roulements ou paliers par rapport à l'électrode.

FIG. 1

FIG. 2

EP 0 370 950 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| D,X | FR-A-2130386 (DEM INDUSTRIES LTD) <br> * page 5, lignes 6 - 33 * | 1 | B23H1/00 <br> B23H7/26 <br> B23Q1/08 |
| D,Y |  | 2, 3 | |
| Y | EP-A-113802 (HARDINGE BROTHERS INC) <br> * page 5, lignes 14 - 35 * | 2, 3 | |
| D,A | FR-A-2572317 (INSTITUT ELEKTRONIKI IMENI) <br> * page 4, lignes 3 - 11 * | 1, 11, 12 | |

|  | DOMAINES TECHNIQUES RECHERCHES (Int. Cl.5 ) |
|---|---|
|  | B23H <br> B23Q |

**Le présent rapport a été établi pour toutes les revendications**

| Lieu de la recherche | Date d'achèvement de la recherche | Examinateur |
|---|---|---|
| LA HAYE | 05 FEVRIER 1990 | DAILLOUX C. |

EPO FORM 1503 03.82 (P0402)